# NEUE EUROPÄISCHE PATENTSCHRIFT

(11) **EP 3 366 454 B2**
(45) Veröffentlichungstag und Bekanntmachung des Hinweises auf die Entscheidung über den Einspruch: **08.01.2025**
(45) Hinweis auf die Patenterteilung: 06.11.2019
(21) Anmeldenummer: 18167577.8
(22) Anmeldetag: 30.07.2008
(51) Int. Cl.: B29C 49/42, B65G 47/90, B25J 15/04

(54) **BLASMASCHINE FÜR BEHÄLTER**
BLOWER FOR CONTAINERS
MACHINE DE SOUFFLAGE POUR RÉCIPIENT

(30) Priorität: 08.08.2007 DE 102007037400
(43) Veröffentlichungstag der Anmeldung: 29.08.2018
(62) Teilanmeldung aus: 08785227.3
(73) Patentinhaber: Krones AG, 93073 Neutraubling (DE)
(72) Erfinder: Schönberger, Wolfgang, 93073 Neutraubling (DE)
(74) Vertreter: Grünecker Patent- und Rechtsanwälte PartG mbB

(56) Entgegenhaltungen:
- EP-A1- 1 743 733
- WO-A1-02/068300
- WO-A2-02/064295
- DE-A1- 2 538 169
- DE-A1- 3 527 105
- DE-U1- 20 302 387
- JP-A- H0 732 458
- JP-A- S6 071 149
- JP-A- S6 163 438
- US-A- 3 339 230
- US-A- 4 456 447
- US-A1- 2004 134 761
- DATABASE WPI Week 196800, Derwent World Patents Index; AN 1968-90650P
- DATABASE WPI Week 198619, Derwent World Patents Index; AN 1986-123135
- DATABASE WPI Week 198607, Derwent World Patents Index; AN 1986-043350
- DATABASE WPI Week 200263, Derwent World Patents Index; AN 2002-591170
- DATABASE WPI Week 200272, Derwent World Patents Index; AN 2002-675002
- DATABASE WPI Week 197710, Derwent World Patents Index; AN 1977-B9487Y
- DATABASE WPI Week 198338, Derwent World Patents Index; AN 1983-765994
- DATABASE WPI Week 199515, Derwent World Patents Index; AN 1995-110049
- DATABASE WPI Week 200340, Derwent World Patents Index; AN 2003-423073
- DATABASE WPI Week 200710, Derwent World Patents Index; AN 2007-093358

## Beschreibung

Die Erfindung betrifft eine Blasmaschine gemäß Oberbegriff des Patentanspruchs 1.

In Streck-Blasmaschinen für Kunststoffflaschen werden vorgefertigte Preforms in einer Förderstrecke durch eine Heizstation gefördert, ehe sie in der Blasstation verarbeitet werden. Jede Preform ist bereits mit einer Mündung ausgebildet, die zumindest im Wesentlichen der Mündung der fertigen Flasche entspricht, und wird in der Förderstrecke an dieser Mündung von einem eingesteckten Preformdorn gehalten. Der Preformdorn ist am in der Förderstrecke montierten Dornhalter tauschbar festgelegt. Da es viele verschiedene Behältertypen, beispielsweise Flaschen, mit unterschiedlichen Mündungen herzustellen gilt, muss die Blasmaschine zum Wechsel auf Preforms mit einer anderen Mündung umgerüstet werden. Der Preformdorn passt nämlich sehr genau in die Mündung und ist deshalb nicht für unterschiedliche Mündungstypen geeignet. Bei einer in der Praxis eingesetzten Blasmaschine besteht die Kupplung aus einer frei endenden Hülse am Dornhalter und einem in die Hülse einsteckbaren Zapfen am Preformdorn. In der Hülse sind zwei diametral gegenüberliegende, jeweils schräg ansteigende Führungsbahnen mit einer Totpunkt-Nockenfläche ausgespart, in die am Zapfen angeordnete Stifte eingreifen. Zusätzlich ist eine Feder vorgesehen, die den Formschluss kraftschlüssig unterstützt. Zum Tausch eines Preformdorns wird bei angehaltener Förderstrecke mit der Hand oder einem Werkzeug am Preformdorn angegriffen, nach oben gedrückt, und dann um seine Längsachse verdreht, bis die Stifte aus den Führungsbahnen austreten. Umgekehrt wird beim Einsetzen eines neuen Preformdorns dieser mit den Stiften in die Führungsbahnen eingefädelt, dabei axial nach oben gedrückt, und bis zum Verriegeln verdreht. Da auf den Dornhalter und den Preformdorn beim Fördern erhebliche thermische Belastungen und Vibrationen einwirken, muss die Kupplung einen sicheren Halt des Preformdorns gewährleisten und deshalb eine relativ hohe Haltekraft generieren, die sein Wechsel überwunden werden muss. Die Handhabung ist mühsam, dauert relativ lang und erfordert erhebliches Geschick. Da in der Förderstrecke oftmals mehrere hundert Dornhalter angeordnet sind, dauert ein Wechsel unzweckmäßig lange.

US3339230A offenbart eine Blasmaschine gemäß dem Oberbegriff des Anspruchs 1.

Der Erfindung liegt die Aufgabe zugrunde, eine Blasmaschine der eingangs genannten Art sowie einen Dornhalter für einen Preformdorn anzugeben, die bedienerfreundlich sind und außerordentlich kurze Wechselzeiten ermöglichen.

Die gestellte Aufgabe wird hinsichtlich der Blasmaschine mit den Merkmalen des Patentanspruchs 1 gelöst.

Durch die funktionelle Trennung der beiden Aufgaben, einerseits zuverlässig die hohe Haltekraft für den Preformdorn durch den Klemmmechanismus zu erzeugen, und andererseits das Löseelement zum Lösen des Klemmmechanismus so leichtgängig wie möglich und ergonomisch günstig zu betätigen, ist die Handhabung der Kupplung sehr bedienerfreundlich und lässt sich die Kupplung sehr rasch einrücken bzw. lösen. Das Löseelement lässt sich nämlich zum Lösen des Klemmmechanismus im Wesentlichen unabhängig von der Haltekraft leicht und nur über einen geringen Hub bewegen, bis der Preformdorn entnommen werden kann oder selbsttätig herausfällt, während bei nicht betätigtem Löseelement der Klemmmechanismus allein für die hohe Haltekraft sorgt. Mittels des Löseelementes ist eine bequeme und rasche Handhabung bei einem Tausch bereits bei manueller Betätigung möglich. Um die Wechselzeit noch weiter zu verkürzen und/oder zu vereinfachen, wird an der Förderstrecke zumindest ein das Löseelement bzw. dessen Handhabe betätigender Dorn-Wechselautomat oder -Halbautomat angeordnet. Dieser kann stationär oder seitlich an die Förderstrecke bringbar und/oder andockbar sein, oder sogar parallel zur Förderrichtung mitverfahren, um einen Preformdorn nach dem anderen oder jeweils gleich eine Preformdorngruppe zu tauschen.

Erfindungsgemäß weist der Dorn-Wechselautomat oder -Halbautomat einen antreibbaren Betätiger (von Hand oder mittels eines pneumatischen, motorischen oder anderen Antriebs) auf, und einen Dorngreifer, der den jeweiligen Preformdorn entnimmt oder einsetzt. Dem Dorngreifer sollte ein Magazin für Preformdorne zugeordnet sein, beispielsweise für einzusetzende oder entnommene oder einzusetzende und entnommene Preformdorne.

Nach einem weiteren wichtigen Merkmal kann zumindest ein Wechselautomat oder -Halbautomat zum Entnehmen und zumindest ein Wechselautomat oder -Halbautomat zum Einsetzen der Preformdorne vorgesehen werden. Dann können auch mehrere Magazine für entnommene und einzusetzende Preformdorne zugeordnet sein.

Zweckmäßig ist die Kupplung des Dornhalters ein Kugelgesperre, das baulich einfach, funktionssicher und leicht zu betätigen ist, dennoch die erforderliche hohe Haltekraft für den Preformdorn erzeugt, und wird nur das Löseelement relativ zum Dornhalter bewegt, um das Kugelgesperre zu lösen. Am Preformdorn braucht nicht angegriffen zu werden. Der Angriff des Löseelementes an dem Kugelgesperre lässt sich so gestalten, dass dieses trotz hoher Haltekraft mit relativ geringer Lösekraft und kleinem Hub bequem und rasch gelöst werden kann. Das Kugelgesperre hat ferner den Vorteil, das Einsetzen des Preformdorns durch einfaches Einstecken zu ermöglichen, ohne das Löseelement auch für diesen Vorgang benutzen zu müssen. Dies schließt nicht aus, dass dennoch ein Kugelgesperre verwendet wird, das auch zum Einsetzen des Preformdorns die Betätigung des Löseelementes erfordert.

Zweckmäßig sind in der Blasmaschine der Klemmmechanismus und das Löseelement im Dornhalter angeordnet. Dies ergibt einen einfachen Aufbau des Preformdorns für den jeweiligen Mündungstyp.

Besonders zweckmäßig wird das Löseelement aus einer Passivstellung, in der das Kugelgesperre selbsttätig wirkt, in etwa in Axialrichtung des Dornhalters relativ zum Dornhalter und auch relativ zum festgelegten Preformdorn in eine Lösestellung bewegt, worauf der Preformdorn leicht entnommen werden kann. Diese Bewegungsrichtung ist nicht nur manuell gut zu beherrschen, sondern auch speziell für einen maschinellen Angriff geeignet, beispielsweise durch einen Dornwechsel-Automaten oder -Halbautomaten.

Zweckmäßig sperrt der Klemmmechanismus nur in Trennrichtung des Preformdorns, während der Preformdorn ohne Betätigung des Löseelementes leicht in den Klemmmechanismus einsetzbar und darin festlegbar ist. Der Preformdorn wird allein durch das Einsetzen und ohne weitere Manipulationen festgelegt.

Bei einer zweckmäßigen Ausführungsform weist das Löseelement eine zwischen dem Dornhalter und dem Preformdorn nach außen ragende Handhabe auf, an der manuell oder maschinell angegriffen wird, um das Löseelement in die Lösestellung zu verstellen. Trotz der im Regelfall beengten Platzverhältnisse an der Förderstrecke einer Blasmaschine ist in diesem Bereich guter Zugriff möglich.

Bei einer alternativen Ausführungsform wird die axiale Bewegung des Löseelementes mittels eines beispielsweise am Dornhalter angeordneten Hilfselements bewerkstelligt, das beispielsweise als in etwa quer zur Axialrichtung betätigbarer Hebel oder Druckknopf ausgebildet ist und die Querbewegung in die Axialbewegung des Löseelementes umlenkt.

Bei einer zweckmäßigen Ausführungsform ist der Preformdorn mit einem Zapfen in einer Einsteckaufnahme des Klemmmechanismus festlegbar.

Zweckmäßig ist der Klemmmechanismus ein Kugelgesperre mit mindestens einer Kugel, vorzugsweise mehrere in Umfangsrichtung verteilten Kugeln. Jede Kugel sitzt unverlierbar in einem Durchgang des Dornhalters, und zwar zwischen einer im Dornhalter in Abziehrichtung des Preformdorns schräg zur Achse des Dornhalters verlaufenden Fläche (Rampe oder konische Fläche) und der zum Einbringen des Zapfens des Preformdorns an einem Ende offenen Dorn-Einsteckaufnahme des Dornhalters.

Damit die Kugel leicht beweglich und dennoch unverlierbar untergebracht ist, ist der dornhalterfest positionierte Durchgang eine sich von außen nach innen verengende Bohrung, vorzugsweise eine Senkbohrung, in die die Kugel eingreift und durch die sie mit ihrem Umfang teilweise bis in die Dorn-Einsteckaufnahme verlagerbar ist, um am Zapfen angreifen zu können. Die Senkbohrung wird in Bezug auf die Kugelkrümmung so gestaltet, dass die Kugel auch ein seitliches und axiales Spiel darin findet, wenn sie am Zapfen angreift. Die Haltekraft (in Drehrichtung und in axialer Richtung) wird über die Wand der Senkbohrung in den Dornhalter übertragen. Der Kugelfreiraum im Dornhalter ermöglicht die für die Funktion des Kugelgesperres erforderlichen Bewegungen jeder Kugel.

Bei einer zweckmäßigen Ausführungsform ist das Löseelement eine vom einen Ende in den Kugelfreiraum eingreifende, verschiebbare Hülse, die, vorzugsweise, auf der Wand des Dornhalters geführt ist und im Dornhalter ausziehfest abgestützt und auf die Kugel ausgerichtet ist.

Bei einer zweckmäßigen Ausführungsform erstreckt sich die Hülse von einem Ende des Kugelfreiraums bis über die jeweilige Kugel hinaus. Die Hülse enthält eine Öffnung für die Kugel, in der sich diese verlagern kann, wodurch die Hülse gegen Ausziehen aus dem Dornhalter abgestützt wird. Obwohl der Dornhalter im Regelfall hängend montiert ist, so dass die Hülse und/oder die Kugel ohnedies unter der Schwerkraft nach unten beaufschlagt sind, kann, vorzugsweise, an der Hülse eine Feder angreifen, die die Hülse in Richtung zur Passivstellung beaufschlagt. Für die Feder reicht eine geringe Vorspannkraft aus, die bei der Betätigung des Löseelementes problemlos überwunden werden kann.

Um die Montage zu vereinfachen, ist, zweckmäßig, angrenzend an die jeweilige Kugelöffnung, in der Hülse außen ein O-Ring positioniert. Der O-Ring verhindert auf einfache Weise, dass bei der Montage oder Demontage die Kugeln herausfallen.

Bei einer baulich einfachen Ausführungsform ist die Handhabe ein nach außen stehender Ringflansch am freiliegenden Ende der Hülse. Um bei der Betätigung an der Handhabe gegebenenfalls die Übertragung von Drehkräften auf die Hülse und die Kugeln zu vermeiden, kann der Ringflansch relativ zur Hülse drehbar sein.

Bei einer Ausführungsform ist der Zapfen am Preformdorn zumindest im Wesentlichen zylindrisch. Die zwischen der Kugel bzw. den Kugeln und der Umfangsfläche des zylindrischen Zapfens entstehende Reibungskraft reicht bei weitem aus, den Preformdorn sicher zu haltern.

Jedoch kann bei einer zweckmäßigen Ausführungsform im Zapfenumfang und im Kugelangriffsbereich eine Vertiefung, vorzugsweise eine seichte Umfangsnut, vorgesehen sein, um sicherzustellen, dass der Preformdorn unter betriebsbedingten Vibrationen und/oder thermischen Einflüssen seine gesperrte Betriebslage nicht unkontrolliert aufgeben kann.

Grundsätzlich hat in dem Dornhalter das Kugelgesperre die vorteilhafte Wirkung, mit relativ geringem und kostengünstigem Aufwand sehr zuverlässig eine hohe Haltekraft für den eingesetzten Preformdorn zu erzeugen, in Verbindung mit einer außerordentlich bequemen und mit sehr geringem Kraftaufwand und kurzem Hub auszuführenden Lösebewegung. Durch die Trennung der Haltefunktion von der Lösefunktion können beide Funktionen optimiert sein und ermöglicht speziell die Lösefunktion außerordentlich kurze Wechselzeiten.

Anhand der Zeichnungen werden Ausführungsformen des Erfindungsgegenstandes erläutert. Es zeigen:
Fig. 1 schematisch eine Behälter-Blasmaschine, die mit Preforms beschickt wird,
Fig. 2 eine Perspektivansicht eines mit einem Preformdorn bestückten Dornhalters, beispielsweise für die Blasmaschine von Fig. 1,
Fig. 3 einen Längsschnitt zu Fig. 2, mit angebrachtem Preform, und
Fig. 4 eine Schemadarstellung eines halbautomatischen bzw. automatischen Preformdorn-Wechselsystems.

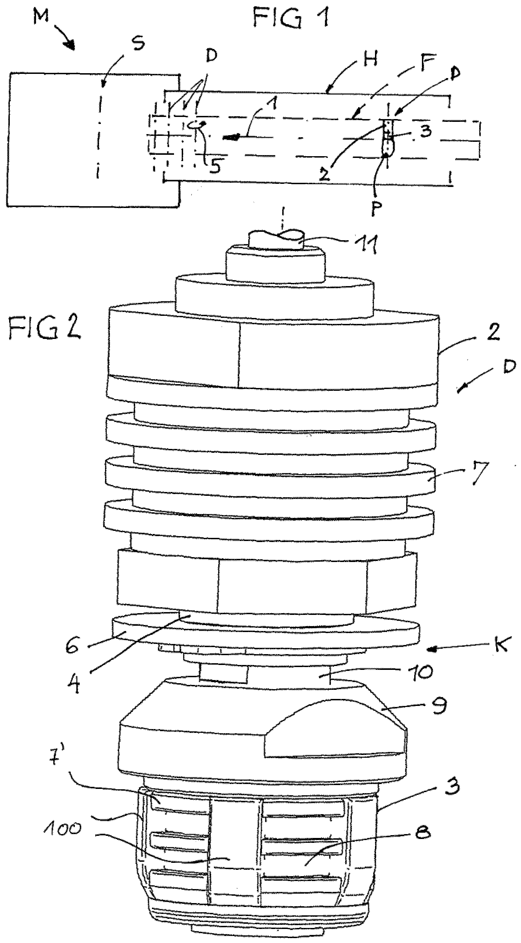

Fig. 1 verdeutlicht schematisch eine Blasmaschine M für Behälter, beispielsweise eine Streckblasmaschine für Kunststoffflaschen. Eine Blasstation S mit einem nicht gezeigten Blasformstern ist an eine Förderstrecke F angeschlossen, die zumindest bereichsweise durch eine Heizvorrichtung H für aufzuheizende oder thermisch zu behandelnde Preforms P verläuft. Die Förderstrecke F bewegt sich im Betrieb in Förderrichtung 1 und enthält eine Vielzahl eng nebeneinander platzierter Dornvorrichtungen D, jeweils aus einem in der Förderstrecke F transportierbaren, hier hängend montierten Dornhalter 2 und einem daran tauschbar angebrachten Preformdorn 3, auf den jeweils ein Preform P aufsteckbar ist. Die Dornvorrichtungen D werden im Betrieb gegebenenfalls um ihre Achsen in Drehrichtung 5 rotiert.

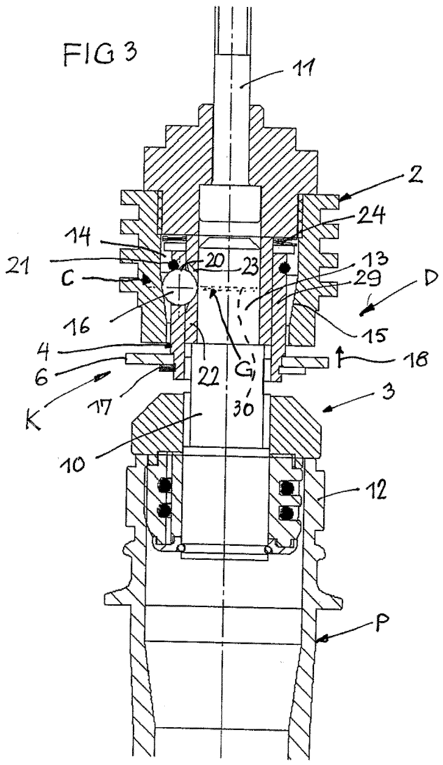

Gemäß Fig. 2 und 3 ist an dem über eine Welle 11 montierten Dornhalter 2 der Preformdorn 3 mittels einer lösbaren Kupplung K tauschbar montiert, um einen Preformdorn 3 für einen Preformtyp mit einem bestimmten Mündungskonzept gegen einen anderen Preformdorn 3 für einen anderen Preformtyp tauschen zu können. Die lösbare Kupplung K ist mittels eines Löseelementes 4 lösbar, an dem eine nach außen ragende Handhabe 6 zum maschinellen oder manuellen Angriff angebracht ist. Der Preformdorn 3 besitzt angrenzend an einen Kopfteil 9 einen oberen Zapfen 10 und am unteren Ende beispielsweise mehrere O-Ringe 8, die mindestens eine Greiferbacke 100 nach außen spreizen zum Halten eines aufgesteckten Preforms P. Am Dornhalter 2 können Kühlrippen 7 geformt sein. Der untere Teil des Kopfteils kann ebenfalls mit Kühlrippen 7' ausgestattet sein. Diese befinden sich im Betrieb innerhalb der Mündung des Preforms, sodass vom Kopfteil Strahlungswärme aufgenommen werden kann, die während des Erwärmungsvorgangs in den Vorformling eingebracht wird. Der Kopfteil 9 ist an seinem unteren Ende mit Greifbacken 100 ausgestattet, die eine Haltekraft auf die Innenoberfläche der Mündung des zu haltenden Preforms auswirken. Die Greifbacken können dabei z.B. mehrere senkrecht in Nuten angebrachte Greifbacken 100, jedoch auch einer oder mehrere in Umfangsrichtung angebrachte Greifbacken 100 sein.

Gemäß Fig. 3 ist ein Kugelgesperre G Hauptbestandteil der lösbaren Kupplung K. Das Kugelgesperre G und das Löseelement 4 sind im Dornhalter 2 angeordnet. Bei einer nicht gezeigten Alternative könnte das Kugelgesperre G wie auch das Löseelement 4 im jeweiligen Preformdorn 3 untergebracht sein.

Die Preform P ist mit ihrer Mündung 12 am Preformdorn 3 festgelegt. Vom Zapfen 10 erstreckt sich über eine Schulter ein weiterer Zapfen 13, der in eine Einsteckaufnahme des Dornhalters 2 einsetzbar und darin mittels des Kugelgesperres G festlegbar ist.

Im Dornhalter 2 ist ein ringförmiger Kugelfreiraum 14 definiert, der außenseitig durch eine schräg oder konisch verlaufende Fläche 15 und innenseitig durch eine Wand 22 des Dornhalters 2 begrenzt wird. Die Fläche 15 ist schräg (in Fig. 3 nach unten) einwärts geneigt und dient als Anzugsfläche für das Kugelgesperre G. Das Kugelgesperre G weist zumindest eine Kugel 16 (oder mehrere in Umfangsrichtung verteilte Kugeln 16) auf, die durch einen Durchgang 23 in der Wand 22 am Zapfen 13 angreift. Der Durchgang 23 ist beispielsweise als sich einwärts verjüngende Senkbohrung ausgebildet, die der Kugel 16 ein gewisses axiales Spiel ermöglicht, jedoch innenseitig kleiner ist als der Kugeldurchmesser. Gegebenenfalls ist im Zapfen 13 im Kugelangriffsbereich eine gestrichelt angedeutete Vertiefung zum Eingriff der Kugel vorgesehen, beispielsweise eine seichte Umfangsnut 30.

Das Löseelement 4 ist eine Hülse 29, die mit einer leichten Gleitpassung auf der Wand 22 verschiebbar geführt wird und sich hier bis über die Kugel 16 hinaus nach oben erstreckt, und unten aus dem unteren Ende des Kugelfreiraums 14 austritt. In der Hülse 29 ist eine Öffnung 20 etwa mit dem Kugeldurchmesser ausgebildet, in der die Kugel einwärts und auswärts verlagerbar ist. Oberseitig angrenzend an die Öffnung 20 ist außenseitig ein die Montage des Kugelgesperres G erleichternder O-Ring 21 in der Hülse 29 platziert. Von oben wirkt auf die Hülse 29 eine Feder 24, beispielsweise eine Wellfeder, mit Vorspannung nach unten ein. Die Handhabe 6 ist bei der gezeigten Ausführungsform ein nach außen vorstehender Ringflansch, der mittels eines Sicherungsringes 17 drehbar auf dem unteren Ende der Hülse 29 montiert ist.

Bei einer nicht gezeigten Alternative könnte die Hülse 29 auch nur von unten an der Kugel 16 angreifen und auf andere Weise ausziehfest im Dornhalter 2 gesichert sein.

Bei einer weiteren, nicht gezeigten Alternative könnte außen am Dornhalter 2 zumindest ein Umlenkhebel angebracht sein, der durch Druck oder Zug quer zur Achse des Dornhalters bewegbar ist, und am Löseelement 4 angreift, um dieses axial zu verstellen. Dieser Hebel lenkt die seitliche Betätigungskraft in die axiale Betätigungskraft des Löseelementes 4 um.

In Fig. 3 ist das Kugelgesperre G in seiner Sperrstellung gezeigt. Jede Kugel 16 liegt mit Druck auf der Fläche 15 auf, und gleichzeitig mit Druck auf den Außenumfang des Zapfens 13. Auf diese Weise wird der Preformdorn 3 gegen Abziehen nach unten gehalten, indem sich jede Kugel 16 im Durchgang 23 und somit in der Wand 22 abstützt.

Um das Kugelgesperre G zu lösen und den Preformdorn 3 zu entnehmen, wird auf das Löseelement 4 aus der gezeigten Passivstellung eine Kraft in Richtung des Pfeiles 18 nach oben ausgeübt, so dass die Kugel 16 entlang der Fläche 15 nach oben bewegt wird, und dadurch ihren Angriff am Zapfen 13 aufgibt. Der Preformdorn 3 fällt dann entweder selbsttätig herab, oder wird von Hand oder mittels eines nicht gezeigten Preformgreifers herausgezogen.

Zum Einsetzen eines neuen Preformdorns 3 braucht nur der Zapfen 13 in die Einsteckaufnahme geschoben zu werden, beispielsweise bis die Schulter zwischen dem Zapfen 10 und dem Zapfen 13 an der Wand 22 ansteht, und zwar ohne das Löseelement 4 zu betätigen, wonach das Kugelgesperre G selbsttätig, z.B. unterstützt durch die Feder 24, die Sperrstellung einnimmt.

Das Löseelement 4 kann manuell betätigt werden, oder maschinell.

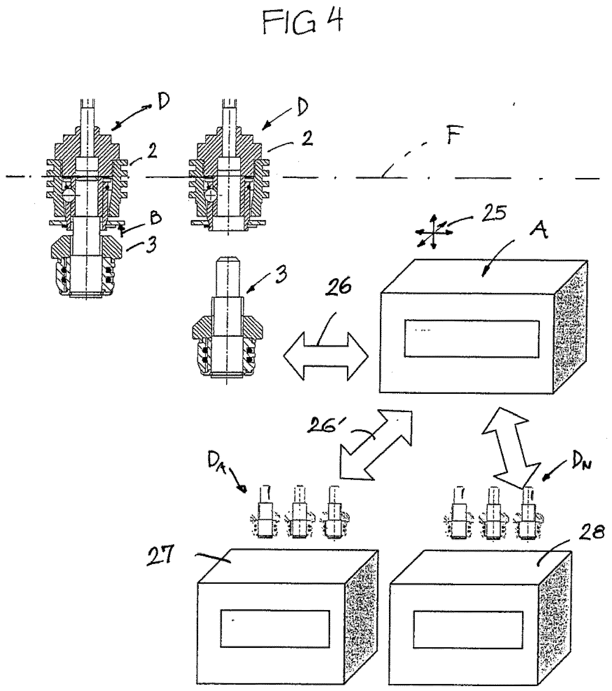

Fig. 4 verdeutlicht ein Wechselsystem für Preformdorne, wobei zwei Dornvorrichtungen D gezeigt sind, von denen die linke noch den Preformdorn 3 im Dornhalter 2 enthält, und gerade ein Betätiger B am Löseelement angreift. Bei der in Fig. 4 rechten Dornvorrichtung D ist der Preformdorn 3 bereits aus dem Dornhalter 2 der Förderstrecke F entnommen.

Zum Einsetzen bzw. Entnehmen des jeweiligen Preformdorns 3 kann ein Wechselautomat oder -Halbautomat A vorgesehen sein, der sich entweder stationär an der Förderstrecke F befindet, oder seitlich an diese verfahrbar und gegebenenfalls andockbar ist, oder sogar mit der Fördervorrichtung mitfahrbar ist (Richtungspfeile 25). Der Automat A weist einen oder mehrere Dorngreifer 26 und antreibbare Betätiger B auf, um jeweils einen oder gleichzeitig mehrere Preformdorne 3 zu wechseln. Der Automat A weist entweder eigene Antriebe für den oder die Dorngreifer 26, 26' und die Betätiger B auf, oder ist auch zum Teil manuell betätigbar, um den jeweiligen Dorngreifer 26, 26' und/oder den jeweiligen Betätiger B beim Wechsel zu bewegen.

Zweckmäßig weist der Automat A zumindest einen Dorngreifer 26, 26' zum Entnehmen von Preformdornen DA und Ablegen in einem Magazin 27 auf, und wenigstens einen Dorngreifer 26, 26' zum Beschaffen und Einsetzen jeweils eines neuen Preformdorns DN z.B. aus einem anderen Magazin 28.

Der Automat A kann zum Ausführen beider Wechseltätigkeiten konzipiert sein, oder nur zum Ausführen einer der Wechseltätigkeiten. Zweckmäßig wird der Automat A an einer Stelle der Förderstrecke positioniert, an der die Förderstrecke F umgelenkt und somit die Dornhalter 2 etwas weiter voneinander beabstandet sind als im geraden Verlauf der Förderstrecke. In diesem Bereich ist guter Zugriff zum Löseelement 4 jedes Dornhalters 2 gegeben.

Die Dornvorrichtung D gemäß Fig. 2 und 3 kann auch für andere Maschinen verwendet werden, bei denen ein Gegenstand mittels eines Dorns zu transportieren oder positionieren ist, und bei denen unterschiedliche Dorne gegeneinander tauschbar sind.

## Patentansprüche

1. Blasmaschine (M) für Behälter, insbesondere Flaschen, mit einer Dornhalter (2) tragenden Förderstrecke (F) und an den Dornhaltern (2) mittels lösbarer Kupplungen (K) tauschbar angebrachter Preformdorne (3), wobei jede Kupplung (K) einen Dorn-Klemmmechanismus (C) und ein von außen zugängliches, zum Lösen des Klemmmechanismus (C) zumindest relativ zum Dornhalter (2) verstellbares Löseelement (4) aufweist, **dadurch gekennzeichnet, dass** an der Förderstrecke (F) zumindest ein das Löseelement (4) betätigender Dorn-Wechselautomat oder -Halbautomat (A) angeordnet ist, wobei der Dorn-Wechselautomat oder -Halbautomat (A) einen antreibbaren Betätiger (B) für das Löseelement (4) und einen motorisch, pneumatisch oder manuell betätigbaren Dorngreifer (26) aufweist.

2. Blasmaschine gemäß Anspruch 1, **dadurch gekennzeichnet, dass** zum Entnehmen eines Preformdorns (3) der Dorngreifer (26) vom und zum Aufnehmen und Einsetzen in den Dornhalter (2) antreibbar ist, und ihm ein Magazin (27) für entnommene und ein Magazin (28) für einzusetzende Preformdorne zugeordnet ist.

## Claims

1. Blow molding machine (M) for containers, in particular bottles, comprising a conveyor path (F) carrying mandrel holders (2) preform-mandrels (3) exchangeably attached by releasable couplings (K) at the mandrel holders (2), wherein each coupling (K) comprises a mandrel clamping mechanism (C) and a release element (4) accessible from outside that can be adjusted at least relative to the mandrel holder (2) for releasing the clamping mechanism (C), **characterized in that** at least one automatic or semiautomatic mandrel change machine (A) for actuating the release element (4) is arranged at the conveyor path (F), wherein the automatic or semiautomatic mandrel change machine (A) comprises a drivable actuator (B) for the release element (4) and a motor-actuable, pneumatically or manually actuable mandrel gripper (26).

2. Blow molding machine according to claim 1, **characterized in that** for removing a preform mandrel (3) the mandrel gripper (26) can be driven to and fro for picking-up and inserting into the mandrel holder (2) and a magazine (27) for removed preform-mandrels as well as a magazine (28) for preform-mandrels to be inserted is allocated thereto.

## Revendications

1. Machine de soufflage (M) pour des récipients, en particulier pour des bouteilles, comprenant une ligne de transport (F), portant des porte-mandrins (2), et des mandrins à préforme (3) mis en place de manière échangeable sur les porte-mandrins (2) au moyen de couplages (K) amovibles, dans laquelle chaque couplage (K) présente un mécanisme de serrage de mandrin (C) et un élément de desserrage (4) accessible de l'extérieur et réglable au moins par rapport au porte-mandrin (2) en vue de desserrer le mécanisme de serrage (C), **caractérisée en ce qu'**au moins un changeur de mandrins automatique ou semi-automatique (A) actionnant l'élément de desserrage (4) est agencé sur la ligne de transport (F), dans laquelle le changeur de mandrins automatique ou semi-automatique (A) présente un actionneur (B) entraînable et destiné à l'élément de desserrage (4) et un préhenseur à mandrin (26) pouvant être actionné par moteur, de manière pneumatique ou manuellement.

2. Machine de soufflage selon la revendication 1, **caractérisée en ce que**, afin de retirer un mandrin à préforme (3), le préhenseur à mandrin (26) peut être entraîné depuis la réception jusqu'à l'insertion dans le porte-mandrin (2), et un magasin (27) destiné aux mandrins à préforme retirés et un magasin (28) destiné aux mandrins à préforme à insérer lui sont associés.
